(19) Europäisches Patentamt
European Patent Office
Office européen des brevets

(11) Numéro de publication : **0 387 119 B1**

(12) **FASCICULE DE BREVET EUROPEEN**

(45) Date de publication du fascicule du brevet : **18.11.93 Bulletin 93/46**

(51) Int. Cl.[5] : **C08G 63/42,** C08G 63/58

(21) Numéro de dépôt : **90400490.0**

(22) Date de dépôt : **21.02.90**

(54) **Procédé de condensation d'au moins un époxyde sur au moins un anhydride cyclique en présence d'un catalyseur à base d'au moins un complexe azoté du titane.**

(30) Priorité : **10.03.89 FR 8903140**

(43) Date de publication de la demande : **12.09.90 Bulletin 90/37**

(45) Mention de la délivrance du brevet : **18.11.93 Bulletin 93/46**

(84) Etats contractants désignés : **AT BE CH DE ES FR GB IT LI LU NL SE**

(56) Documents cités :
**DE-A- 1 495 023**
**GB-A- 1 101 247**

(73) Titulaire : **INSTITUT FRANCAIS DU PETROLE**
**4, Avenue de Bois Préau**
**F-92502 Rueil-Malmaison (FR)**
Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**
Titulaire : **ELF FRANCE**
**Tour Elf 2, Place de la Coupole**
**LA DEFENSE 6 - 92400 Courbevoie (FR)**

(72) Inventeur : **Bagrel, Valérie**
**5, rue Durand Bénech**
**F-92260 Fontenay-aux-Roses (FR)**
Inventeur : **Garapon, Jacques**
**120, rue Mazenod**
**F-69003 Lyon (FR)**
Inventeur : **Touet, Rémi**
**Résidence Mutualiste, Boîte Postale 220**
**F-38522 Saint Egreve Cedex (FR)**
Inventeur : **Huet, Catherine**
**50, route de Givry, Saint Remy**
**F-71100 Chalon sur Saone (FR)**
Inventeur : **Damin, Bernard**
**162, Grande Rue**
**F-69600 Oullins (FR)**

(74) Mandataire : **Andreeff, François et al**
**INSTITUT FRANCAIS DU PETROLE 4, avenue de Bois-Préau**
**F-92502 Rueil-Malmaison (FR)**

EP 0 387 119 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un procédé de condensation d'au moins un époxyde sur au moins un anhydride cyclique d'un acide dicarboxylique en présence d'un catalyseur à base d'au moins un complexe azoté du titane.

La présente invention a également pour objet un procédé de production de polyesters alternés, saturés ou insaturés, par condensation d'au moins un époxyde sur au moins un anhydride cyclique d'un acide dicarboxylique.

Ce type de polyesterification se différencie du procédé classique, où l'on met en oeuvre un composé dihydroxylé (ou diol) et un anhydride ou un acide dicarboxylique, en particulier par le fait que la température de polycondensation ne dépasse habituellement pas 150 °C et surtout par le fait qu'il ne se dégage aucune matière volatile au cours de la réaction.

La condensation entre un époxyde ou dérivé époxydé et un anhydride cyclique a suscité de nombreux travaux, résumés, par exemple, par LUSTON et VASS (Advances in Polymer Sciences 1984, Vol. 56, pages 91 et suivantes) ou par ISHII et SAKAI (Ring opening polymerisation, pages 13 et suivantes, édité par K.C. FRISCH et S.REEGEN, MARCEL DEKKER 1969).

L'examen des travaux cités montre que l'un des problèmes majeurs posés par ce type de condensation est l'homopolymérisation de l'époxyde conduisant à l'obtention d'un polyether-polyester séquencé ou à des mélanges de polymères, en particulier lorsque l'on utilise des acides de LEWIS ($TiCl_4$, $BF_3$...) comme catalyseur de condensation. Afin de pallier cet inconvénient, on a proposé, dans l'art antérieur, l'emploi de catalyseurs anioniques ou de coordination.

FISCHER (Journal of Polymer Science 1960, Vol. 44, pages 155 et suivantes) a montré que l'utilisation d'amine tertiaire comme catalyseur de condensation d'un anhydride sur un époxyde permet d'obtenir une condensation alternée.

Cependant, ce type de catalyseur s'avère inopérant dans le cas de l'anhydride maléique, vraisemblablement en raison des réactions secondaires complexes avec les amines au niveau de la double liaison maléique. D'autres types de catalyseurs anioniques, tels que les sels de métaux alcalins ou les sels de tétraalkylammonium, ont également été utilisés. Par exemple, WADILL, MILLIGAN et PEPPEL (Industrial and Engineering Chemistry, Product Research and Development 1964, Vol. 3 part. 1, pages 53 et suivantes) décrivent l'emploi du chlorure de lithium en présence de substances protoniques à 150 °C. Ces auteurs suggèrent que l'homopolymérisation de l'époxyde intervient pour une part dans leur procédé. Comme exemple de catalyseur de coordination, on peut citer les dialkylzinc mentionnés par INOUE et al. (Makromoleculare Chemie 1969, Vol. 126, pages 250 et suivantes) ; ce type de catalyseur n'est en fait applicable, d'après INOUE et al., qu'au seul anhydride phtalique.

Le brevet US-A-4 565 845 décrit l'utilisation d'un système catalytique comprenant une porphyrine d'aluminium qui permet d'obtenir un polyester ayant une assez bonne alternance entre le motif provenant de l'anhydride et celui provenant de l'époxyde.

D'autres catalyseurs, à base de métaux de transition, ont également été décrits antérieurement. C'est ainsi que FISCHER (cité supra) observe une homopolymérisation partielle de l'époxyde glycidique lors de sa polycondensation avec l'anhydride phtalique en présence de titanate de tétrabutyle.

Le brevet US-A-3 546 176 revendique l'utilisation du titanate de tétrabutyle pour la production de polyesters insaturés à partir d'anhydrides d'acides insaturés et d'époxydes. Cependant, comme le confirmera un test effectué par la demanderesse et décrit ci-après, ce catalyseur ne permet pas d'obtenir une bonne alternance des motifs provenant de l'anhydride et de l'époxyde.

De façon surprenante, on a découvert qu'il est possible d'obtenir, avec une conversion élevée des produits de départ, un polyester alterné, par condensation d'au moins un époxyde sur au moins un anhydride cyclique d'un acide dicarboxylique, en présence d'un catalyseur de condensation à base d'au moins un complexe azoté du titane de formule générale (I) :

$$\text{(I)} \qquad Ti(OR^1)_m(OR^2)_n(OR^3)_p\, L_q$$

dans laquelle:

- m, n et p représentent chacun, indépendamment les uns des autres, un nombre égal à 0 ou à 1, q représente un nombre entier de 1 à 4 et, dans tous les cas, la somme m + n + p + q est égale à 4;
- $R^1$, $R^2$ et $R^3$ représentent chacun, indépendamment les uns des autres, un groupe hydrocarboné, ayant de 1 à 30 atomes de carbone, de préférence de 1 à 14 atomes de carbone tel que par exemple un groupe alkyle ou alcényle, linéaire ou ramifié, substitué ou non par au moins un hétéroatome ou par au moins un groupe hétéroatomique ;
- le ou les groupes L représentent, indépendamment les uns des autres, le reste d'un composé azoté.

A titre d'exemples non limitatifs de groupes hydrocarbonés $R^1$, $R^2$ et $R^3$, on peut citer les radicaux méthyle,

éthyle, propyles, butyles, pentyles, hexyles, heptyles, octyles, nonyles et décyles. Au sens de la présente description, les termes propyles, butyles, pentyles, hexyles, heptyles, octyles, nonyles et décycles désignent tous les radicaux alkyles linéaires ou ramifiés ayant respectivement 3, 4, 5, 6, 7, 8, 9 et 10 atomes de carbone.

Les complexes azotés du titane de formule (I) ci-avant utilisés le plus souvent sont ceux dans lesquels le ou les groupes L représentent, chacun indépendamment, le reste d'un composé choisi dans le groupe formé par les composés azotés de formule générale (II) et de formule générale (III) et résultant de l'abstraction d'un hydrogène du groupe -X défini ci-après ou du groupe -OH dans le cas des composés de formule (III) :

(II)

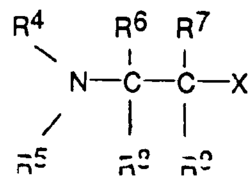

(III)

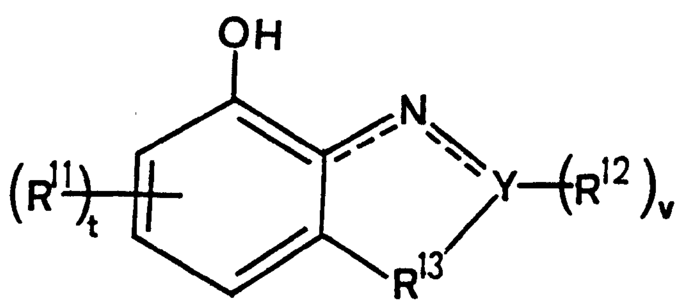

Les composés de formule générale (II) utilisés habituellement sont ceux dans lesquels -X représente un groupe hydroxyle (-OH) ou un groupe azoté de formule $-NHR^{10}$ dans laquelle $R^{10}$ représente un atome d'hydrogène ou un groupe hydrocarboné ayant de 1 à 30 atomes de carbone, de préférence de 1 à 14 atomes de carbone et le plus souvent de 1 à 4 atomes de carbone, substitué ou non par au moins un hétéroatome ou par au moins un groupe hétéroatomique ; $R^4$, $R^5$, $R^6$, $R^7$, $R^8$ et $R^9$ représentent chacun, indépendamment les uns des autres, un atome d'hydrogène ou un groupe hydrocarboné ayant de 1 à 30 atomes de carbone, de préférence de 1 à 14 atomes de carbone, substitué ou non par au moins un hétéroatome ou par au moins un groupe hétéroatomique, deux au moins de ces radicaux $R^4$ à $R^9$ pouvant former ensemble avec les atomes auxquels ils sont liés un cycle aliphatique saturé ou insaturé, un cycle aromatique ou un hétérocycle saturé ou insaturé.

Parmi les composés de formule générale (II) ci-avant, on utilise le plus souvent ceux dans lesquels -X représente un groupe hydroxyle ou un groupe de formule $-NH\ R^{10}$ dans laquelle $R^{10}$ représente un groupe hydrocarboné, par exemple, un groupe alkyle ayant de 1 à 4 atomes de carbone, et ceux dont les groupes $R^4$ et $R^5$ représentent chacun, indépendamment l'un de l'autre, un atome d'hydrogène, un groupe hydrocarboné aliphatique comportant éventuellement au moins un hétéroatome dans sa chaine ou au moins un groupe hétéroatomique sur la chaine tel que par exemple un groupe hydroxyle et dont les groupes $R^6$, $R^7$, $R^8$ et $R^9$ représentent chacun, indépendamment les uns des autres, un atome d'hydrogène ou un groupe hydrocarboné tel que par exemple un groupe alkyle ou alcényle et ,en particulier, un groupe akyle inférieur ayant de 1 à 4 atomes de carbone tel que méthyle, éthyle, propyles et butyles.

A titre d'exemples spécifiques de groupes $R^4$ et $R^5$, on peut citer l'hydrogène, les groupes alkyles et alcényles inférieurs et les groupes hydroxyalkyles inférieurs ayant par exemple de 1 à 4 atomes de carbone, tels que méthyle, éthyle, propyles, butyles, hydroxy-2 éthyle, hydroxy-2 propyle, hydroxy-2 méthyl-1 propyle et hydroxy-2 butyle.

Dans une forme avantageuse de réalisation de l'invention, les composés de formule générale (II) employés sont ceux dans lesquels :

- X représente un groupe hydroxyle ;
- $R^4$ ou $R^5$, et de préférence chacun d'eux indépendamment l'un de l'autre, représente un groupe hydrocarboné aliphatique, substitué ou non par au moins un hétéroatome ou par au moins un groupe hétéroatomique, par exemple $R^4$ et $R^5$ représentent chacun, indépendamment l'un de l'autre, un groupe alkyle inférieur ou un groupe hydroxy-alkyle inférieur tel que ceux mentionnés ci-avant ;
- $R^6$, $R^7$, $R^8$ et $R^9$ représentent chacun un atome d'hydrogène, ou l'un d'entre eux représente un groupe akyle inférieur tel que défini ci-avant, les autres représentant chacun un atome d'hydrogène, ou deux d'entre eux, par exemple $R^6$ et $R^8$ représentent un groupe alkyle inférieur tel que défini ci-avant, les deux

autres représentant chacun un atome d'hydrogène.

A titre d'exemples non limitatifs de composés spécifiques de formule générale (II), on peut citer : la monoéthanolamine, la diéthanolamine, la triéthanolamine, l'amino-1 propanol-2 ou monoisopropanolamine, la diisopropanolamine, la triisopropanolamine, l'amino-1 butanol-2 ou mono-sec-butanolamine, la di-sec-butanolamine, la tri-sec-butanolamine, le diméthylamino-2 éthanol ou diméthyléthanolamine, la diéthyléthanolamine, le méthylamino-2 éthanol ou méthyléthanolamine, la butyléthanolamine, la dibutyléthanolamine, l'isopropyléthanolamine, la diisopropyléthanolamine, la méthyldiéthanolamine, l'éthyldiéthanolamine, le diméthylamino-1 propanol-2 ou diméthylisopropanolamine l'amino-2 méthyl-2 propanol-1, la diméthylamino-2, méthyl-2 propanol-1 et la triméthyléthylène diamine.

Parmi les composés de formule (III) ci-avant, on utilise, habituellement, ceux dans lesquels :

- t représente un nombre entier de 1 à 3,
- v représente 0 ou 1,
- chacun des $R^{11}$, indépendamment, représente un atome d'hydrogène, un atome d'halogène (chlore, brome, iode ou fluor), un groupe hydrocarboné ayant de 1 à 30 atomes de carbone, de préférence de 1 à 14 atomes de carbone, substitué ou non par au moins un hétéroatome ou par au moins un groupe hétéroatomique, deux groupes $R^{11}$ (lorsque t représente 2 ou 3) pouvant former ensemble avec les atomes de carbone auxquels ils sont liés un cycle hydrocarboné saturé, insaturé, aromatique ou un hétérocycle;
- Y représente un atome de carbone lorsque v = 1 ou un hétéroatome lorsque v = 0, par exemple, un atome d'azote ;
- l'atome d'azote est lié par une double liaison soit au cycle portant le groupe hydroxyle, soit au groupe -Y lorsque -Y représente un atome de carbone et v = 1 ;
- $R^{12}$ représente un atome d'hydrogène, un groupe hydrocarboné ayant de 1 à 30 atomes de carbone, de préférence de 1 à 14 atomes de carbone, substitué ou non par au moins un hétéroatome ou par au moins un groupe hétéroatomique, $R^{12}$ pouvant également former avec l'atome auquel il est lié et avec l'un des atomes du groupe $R^{13}$, défini ci-après, un cycle hydrocarboné saturé, insaturé, aromatique ou un hétérocycle ;
- $R^{13}$ représente un groupe hydrocarboné divalent ayant de 1 à 12 atomes de carbone et de préférence de 1 à 6 atomes de carbone, substitué ou non par au moins un hétéroatome ou par au moins un groupe hétéroatomique.

Fréquemment, t = 3 et chacun des groupes $R^{11}$, indépendamment, représente un atome d'hydrogène, un atome d'halogène, un groupe alkyle linéaire ou ramifié par exemple de $C_1$ à $C_{10}$, tels que ceux mentionnés ci-avant, un groupe aryle, par exemple de $C_6$ à $C_{18}$, un groupe alkyloxy, par exemple de $C_1$ à $C_{10}$, un groupe aryloxy, par exemple de $C_6$ à $C_{18}$ ; le plus souvent au moins 2 des groupes $R^{11}$ représentent un atome d'hydrogène, le troisième ayant la définition donnée ci-avant et dans une forme préférée chacun des groupes $R^{11}$ représente un atome d'hydrogène; lorsque v = 1 et -Y représente un atome de carbone, alors $R^{12}$ représente de préférence un atome d'hydrogène ou un groupe formant un cycle de préférence aromatique avec l'un des atomes de carbone du groupe $R^{13}$ ; lorsque v = 1 et -Y représente un atome de carbone alors $R^{13}$ représente de préférence un groupe hydrocarboné divalent saturé ayant 1 atome de carbone, un groupe hydrocarboné divalent, insaturé ayant 2 atomes de carbone ou un groupe hétéroatomique insaturé comprenant un atome d'azote et un atome de carbone, ledit atome d'azote pouvant être lié directement au cycle portant le groupe hydroxyle par exemple en position méta dudit groupe hydroxyle ou pouvant être lié directement au groupe -Y lorsque v=0 et -Y représente un hétéroatome, de préférence un atome d'azote, $R^{13}$ représente un groupe hydrocarboné divalent ayant habituellement de 1 à 12 atomes de carbone et de préférence de 1 à 6 atomes de carbone, substitué ou non par au moins un groupe hétéroatomique ; $R^{13}$ représente dans ce cas , de préférence, un groupe hydrocarboné divalent insaturé ayant 2 atomes de carbone.

A titre d'exemples non limitatifs de composés de formule générale (III) on peut citer: l'hydroxy-8 quinolèine, l'hydroxy-7 indole, l'hydroxy-5 ou-8 quinoxaline, l'hydroxy-8 quinazoline, l'hydroxy-8 cinnoline, l'hydroxy-4 ou-5 acridine, l'hydroxy-1,-4,-6 ou -9 phénazine et les dérivés de ces composés, hydroxylés hétérocycliques azotés, substitués par au moins un groupe $R^{11}$ tel que défini ci-avant.

Les complexes azotés de titane employés comme catalyseurs de condensation dans la présente invention peuvent être préparés par toute méthode de synthèse des complexes de ce type bien connue de l'homme du métier, par exemple par réaction d'un composé azoté de formule générale (II) ou (III) sur un titanate de formule $Ti(OR)_4$ ou chacun des R indépendamment les uns des autres désigne un groupe tel que l'un de ceux définis ci-avant pour $R^1$, $R^2$, et $R^3$.

Dans une forme de réalisation la plus fréquente de l'invention, le complexe azoté de titane que l'on emploie est défini par la formule (I) ci-avant dans laquelle m = n = 1, p = 0 ou 1 (de préférence p = 1) , et q = 2 ou 1 ( de préférence q = 1). Dans cette forme de réalisation de l'invention les groupes $R^1$, $R^2$ et $R^3$ lorsqu'il est présent, seront habituellement identiques et de préférence choisis parmi les groupes alkyles inférieurs linéaires

ou ramifiés ayant de 1 à 4 atomes de carbone, tel que ceux décrits ci-avant, et le ou les groupes L, identiques ou différents, seront choisis, par exemple, parmi ceux provenant des composés suivants : l'hydroxy-8 quinoléine, le diméthylamino-1 propanol-2, la méthyldiéthanolamine dénommée selon la nomenclature du Chemical Abstracts 2,2'-(méthylimino) bis éthanol "11ème collective index" et la diméthyléthanolamine.

L'anhydride cyclique d'un acide dicarboxylique que l'on emploie dans la présente invention est de préférence un anhydride cyclique d'un acide dicarboxylique vicinal, saturé ou insaturé, et le plus souvent insaturé.

L'anhydride cyclique utilisé comporte habituellement de 4 à 160 atomes de carbone, souvent de 4 à 90 atomes de carbone, et le plus souvent de 4 à 30 atomes de carbone dans sa molécule.

On peut ainsi citer, à titre d'exemples non limitatifs, l'anhydride maléique, les anhydrides akylmaléiques (tel que par exemple l'anhydride citraconique ou méthylmaléique), les anhydrides halogéno-maléiques (tels que par exemple, les anhydrides chloro- et bromo-maléiques), l'anhydride succinique, les anhydrides alcénylsucciniques (tels que, par exemple, l'anhydride itaconique ou méthylène succinique, l'anhydride n-octadécénylsuccinique et l'anhydride dodécénylsuccinique), les anhydrides polyalcénylsucciniques ayant, habituellement, une masse moléculaire moyenne en nombre d'environ 200 à 3000 et le plus souvent d'environ 250 à 2000 (tels que, par exemple, les anhydrides polypropényl- succiniques, en particulier, l'anhydride tétrapropénylsuccinique, et les anhydrides polyisobutènylsucciniques souvent dénommés PIBSA), l'anhydride phtalique, les anhydrides phtaliques substitués par au moins un atome d'halogène et/ou au moins un groupe alkyle, par exemple, un groupe alkyle inférieur ayant de 1 à 4 atomes de carbone, l'anhydride trimellitique, l'anhydride cyclohexanedicarboxylique-1,2, les anhydrides cyclohexanedicarboxyliques-1,2 substitués par au moins un atome d'halogène et/ou au moins un groupe alkyle, par exemple, un groupe alkyle inférieur ayant de 1 à 4 atomes de carbone, l'anhydride nadique ou bicyclo [2,2,1] heptène-5 dicarboxylique-2,3 et les anhydrides nadiques substitués par au moins un atome d'halogène et/ou au moins un groupe alkyle, par exemple, un groupe alkyle inférieur ayant de 1 à 4 atomes de carbone. On peut encore citer, à titre d'exemples d'anhydride cyclique d'un acide dicarboxylique non vicinal, l'anhydride glutarique, les anhydrides glutariques substitués par au moins un atome d'halogène et/ou au moins un groupe alkyle, par exemple un groupe alkyle inférieur ayant de 1 à 4 atomes de carbone, l'anhydride glutaconique et les anhydrides glutaconiques substitués par au moins un atome d'halogène et/ou au moins un groupe alkylke, par exemple un groupe alkyle inférieur ayant de 1 à 4 atomes de carbone.

L'époxyde que l'on emploie dans la présente invention est habituellement un composé monoépoxydé répondant à la formule générale

(IV) 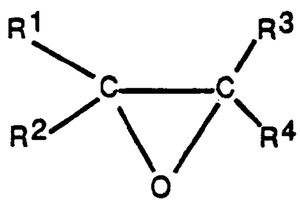

dans laquelle $R^1$ et $R^3$, identiques ou différents, représentent chacun un atome d'hydrogène ou un groupe alkyle inférieur ayant de 1 à 4 atomes de carbone tel que méthyle, éthyle, propyles et butyles ; $R^2$ et $R^4$, identiques ou différents, représentent chacun un atome d'hydrogène, un groupe hydrocarboné, éventuellement substitué par au moins un atome d'halogène, ayant de 1 à 30 atomes de carbone (tel que, par exemple, un groupe alkyle ayant de 1 à 30 atomes de carbone, un groupe alcényle ayant de 2 à 30 et le plus souvent de 3 à 30 atomes de carbone, un groupe cycloaliphatique ayant de 3 à 30 et le plus souvent de 5 à 30 atomes de carbone un groupe aryle ayant de 6 à 30 atomes de carbone, un groupe aryl-alkyle (aralkyle) ou un groupe akyl-aryle (alkaryle) ayant de 7 à 30 atomes de carbone ou les groupes correspondant substitués par au moins un atome d'halogène), un groupe de formule $R^5$-O-$R^6$- dans laquelle $R^5$ représente un groupe hydrocarboné, éventuellement substitué par au moins un atome d'halogène, ayant de 1 à 30 atomes de carbone tel que, par exemple, les groupes hydrocarbonés décrits ci-avant et $R^6$ représente un groupe hydrocarboné divalent ayant de 1 à 30 atomes de carbone tel que, par exemple, un groupe alkylène ayant de 1 à 30 atomes de carbone, un groupe alcénylène ayant de 2 à 30 et le plus souvent de 4 à 30 atomes de carbone, un groupe cycloakylène ayant de 3 à 30 et le plus souvent de 5 à 30 atomes de carbone ou un groupe arylène ayant de 6 à 30 atomes de carbone ; $R^2$ peut également représenter un groupe de formule

$$R^5\text{-O-}\underset{\underset{\displaystyle O}{\|}}{C}\text{-}R^6\text{-}$$

ou un groupe de formule

$$R^5\text{-}\underset{\underset{\displaystyle O}{\|}}{C}\text{-O-}R^6\text{-},$$

dans lesquelles $R^5$ et $R^6$ ont la définition donnée ci-avant, tel que, par exemple, un groupe alkoxycarbonylalkylène ou un groupe alkylcarbonyloxyalkylène ; $R^2$ et $R^4$ peuvent également former ensemble avec les atomes de carbone auxquels ils sont liés un cycle saturé ou insaturé ayant par exemple de 4 à 30 atomes de carbone.

On peut également employer des mélanges de composés époxydés comprenant habituellement une proportion d'au moins 80 %, de préférence d'au moins 90 % et par exemple d'au moins 95 % en moles de composés monoépoxydés et contenant des composés qui renferment plusieurs groupes époxydes (cycles oxirannes) dans leur molécule, par exemple, deux ou trois groupes époxydes ; la proportion molaire des composés polyépoxydés dans le mélange représente le complément à 100 %;

Le composé époxydé utilisé comporte, habituellement, de 2 à 62 atomes de carbone et, de préférence, de 2 à 40 atomes de carbone dans sa molécule.

A titre d'exemples de composés époxydés, on peut citer :
l'oxyde d'éthylène, l'oxyde de propylène, l'époxy-1,2, butane, l'époxy-1,2, pentane, l'époxy-1,2, hexane, l'époxy-1,2, heptane, l'époxy-1,2 octane, l'époxy-1,2 nonane, l'époxy-1,2, décane, l'époxy-1,2 undécane, l'époxy-1,2 dodécane, l'époxy-1,2 tétradécane, l'époxy-1,2 pentadécane, l'époxy-1,2 hexadécane, l'époxy-1,2 heptadécane, l'époxy-1,2 octadécane, l'époxy-1,2 nonadécane, l'époxy-1,2 eicosane, l'époxy-1,2 docosane, l'époxy-1,2 tétracosane, l'époxy-1,2 hexacosane, les polybutènes époxydés de masse moléculaire moyenne (Mn) comprise entre environ 100 et environ 1000, l'époxy-2,3 butane, l'époxy-2,3 pentane, l'époxy-2,3 hexane, l'époxy-3,4 heptane, l'époxy-2,3 octane, l'époxy-3,4 octane, l'époxy-3,4 décane, l'époxy-9,10 octadécane, l'éthoxy-3 époxy-1,2 propane, le propoxy-3 époxy-1,2, propane, le butoxy-3 époxy-1,2 propane, le pentyloxy-3 époxy-1,2 propane, l'hexyloxy-3 époxy-1,2 propane, l'heptyloxy-3 époxy-1,2 propane, l'octyloxy-3 époxy-1,2 propane, le décyloxy-3 époxy-1,2 propane, le dodécyloxy-3 époxy-1,2 propane, l'acétoxy-1 époxy-2,3 propane, le butyryloxy-1 époxy-2,3 propane, le lauroyloxy-1 époxy-2,3 propane, le myristoyloxy-3 époxy-1,2 propane, le palmitoyloxy-3 époxy-1,2 propane, le stéaroyloxy-3 époxy-1,2 propane, les esters alkyliques, par exemple, méthyliques, éthyliques, propyliques, butyliques, éthyl-2 hexyliques et hexadécyliques des acides époxy-3,4 butanoïque, époxy-4,5 pentanoïque, époxy-3,4 nonanoïque, époxy-10,11 undécanoïque, époxy-6,7 octadécanoïque, époxy-12,13 octadécanoïque, époxy-11, 12 octadécanoïque, époxy-9,10 octadécanoïque, époxy-11,12 eicosanoïque et époxy-13,14 docosanoïque, le chloro-1 époxy-2,3 propane, l'époxy-2,3 méthyl-2 butane, l'alphapinèneoxyde (triméthyl-2,7,7 oxa-3 tricyclo [4,1,1,0] octane) et l'oxyde de styrène (phényloxiranne).

A titre d'exemple de mélanges de composés époxydés comprenant des polyépoxydes, on peut citer celui des esters alkyliques obtenu par estérification des époxyacides résultant de l'époxydation d'un mélange d'acides gras éthyléniquement insaturés.

Le mélange d'acides gras éthyléniquement insaturés est, par exemple, un mélange comportant, en proportions pondérales données dans le tableau I, ci-dessous, des acides (saturés et insaturés) ayant de 12 à 20 atomes de carbone dans leur molécule. Ce mélange est habituellement dénommé oléine.

## TABLEAU I

| ACIDES | $C_{12}^{*}$ | $C_{14}^{*}$ | $C_{14.1}$ | $C_{15}^{*}$ | $C_{16}^{*}$ | $C_{16.1}$ | $C_{17.1}$ | $C_{18}^{*}$ | $C_{18.1}$ | $C_{18.2}$ | $C_{18.3}$ | $C_{20.1}$ |
|---|---|---|---|---|---|---|---|---|---|---|---|---|
| %Poids | 0,8 | 2,7 | 1,0 | 0,5 | 5,0 | 5,5 | 1,5 | 1,5 | 68,0 | 10,0 | 2,5 | 1,0 |

* Acides saturés

Dans ce tableau I, $C_{p.1}$ désigne des acides comportant une insaturation éthylénique, $C_{p.2}$ désigne des acides comportant 2 insaturations éthyléniques et $C_{p.3}$ désigne des acides comportant 3 insaturations éthyléniques (p est le nombre d'atomes de carbone).

Pour l'estérification du mélange d'époxyacides, on utilise, par exemple, un mélange d'alcools comprenant environ en poids 95 % d'alcool n-hexadécylique, 3 % d'alcool n-octadécylique et 2 % d'alcools ayant plus de 18 atomes de carbone dans leur molécule.

La condensation entre au moins un époxyde et au moins un anhydride cyclique d'un acide dicarboxylique peut être effectuée en présence ou en absence de solvant. On préfère en général utiliser un solvant, tel que par exemple un solvant hydrocarboné. A titre d'exemples non limitatifs de solvants hydrocarbonés utilisables, on peut citer le benzène, le toluène, le xylène, l'éthylbenzène, le cyclohexane, l'hexane ou un mélange d'hydrocarbures tel que, par exemple, une coupe hydrocarbonée à point d'ébullition élevée telle qu'un gazole, un kérosène ou la coupe commerciale SOLVESSO 150 (190-209 °C ) contenant 99 % en poids de composés aromatiques. On peut également utiliser des mélanges de solvants, par exemple, un mélange de xylènes.

La réaction de condensation est habituellement effectuée à une température d'environ 30 à environ 200 °C, de préférence d'environ 40 à environ 180 °C et par exemple d'environ 60 à environ 150 °C. On opère généralement sous pression normale ou sous la pression engendrée par les constituants du mélange, mais il est possible d'opérer sous une pression plus élevée.

La condensation entre l'anhydride cyclique et l'époxyde est en général effectuée en employant des quantités de chacun de ces deux composés telles que le rapport molaire époxyde/anhydride cyclique soit d'environ 0,5 : 1 à environ 2 : 1, de préférence d'environ 0,7 : 1 à environ 1,3 : 1 et, de manière encore plus préférée, d'environ 0,9 : 1 à environ 1,1 : 1.

La durée de la réaction est généralement d'environ 1 à environ 24 heures et par exemple d'environ 2 à environ 12 heures. Cette durée est de préférence celle qui correspond, dans les conditions choisies, à une disparition pratiquement complète de l'un des réactifs (époxyde ou anhydride) mis en jeu dans la réaction.

Le catalyseur à base de titane peut être ajouté au mélange d'époxyde et d'anhydride soit sous forme solide ou liquide, soit sous forme diluée (solution ou dispersion) dans un solvant qui est habituellement le même que celui employé pour la condensation.

La quantité de catalyseur à base de titane employée, exprimée en atome-gramme de titane pour 100 moles d'époxyde est habituellement de 0,05 à 5 % et, de préférence de 0,1 à 2 %.

Le polyester issu de la condensation selon l'invention est un composé qui présente habituellement une masse moléculaire moyenne en nombre d'environ 400 à 50 000 et dont les motifs issus de l'époxyde et de l'anhydride sont régulièrement alternés. Par ailleurs, l'utilisation de complexes azotés du titane permet de réduire très largement l'homopolymérisation de l'époxyde par rapport à ce que l'on obtient en utilisant du titanate de butyle, tout en conservant une vitesse de réaction élevée, ce qui permet aussi d'obtenir, à isoconditions, une conversion des produits de départ relativement élevée comme le montrent les exemples suivants.

Ces exemples illustrent l'invention sans en limiter la portée.

### Exemple 1

On introduit, dans un réacteur de 100 ml, muni d'un système d'agitation et d'un système de régulation de température, 14,7 g (0,15 mole) d'anhydride maléique, 27,6 g (0,15 mole) d'époxy-1,2 dodécane, 7,4 g de phényldodécane, 17,6 g de toluène et 0,62 g (1,5 x$10^{-3}$ mole) de complexe azoté de titane de formule générale (I), définie ci-avant, dans laquelle $R^1$, $R^2$ et $R^3$, identiques, représentent chacun un groupe n-butyle, m = n = p = q = 1 et L représente le reste de l'hydroxy-8 quinoléine (reste d'un composé répondant à la formule générale (III) définie ci-avant).

Ce complexe de titane a été préalablement obtenu par simple agitation d'une quantité équimoléculaire de titanate de tétra n-butyle (Ti $(OC_4H_9)_4$) et d'hydroxy-8 quinoléine, à une température de 80 °C, dans du toluène pendant une demi-heure, suivi d'un ajustement de la quantité de toluène de manière à obtenir une solution à 50 % en poids de produit dans le solvant ; cette solution est utilisée pour introduire la quantité choisie du complexe azoté de titane dans le réacteur.

Le mélange obtenu dans le réacteur est porté à 100 °C et maintenu sous agitation constante, à cette température pendant six heures. La réaction est suivie par spectrométrie infrarouge (IR) et par Chromatographie d'Exclusion sur Gel (GPC). En spectrométrie infrarouge, on observe l'apparition d'une bande ester à 1730 $cm^{-1}$ et la disparition des bandes carbonyles de l'anhydride maléique à 1770 $cm^{-1}$ et 1840 $cm^{-1}$. On a représenté sur la figure 1 le pourcentage de conversion de chacun des constituants en fonction du temps en heure (mesure par GPC; le phényldodécane présent dans le milieu de réaction est utilisé comme étalon interne). La courbe A concerne l'anhydride maléique et la courbe B l'époxy-1,2 dodécane. Après 6 heures de réaction à 100 °C la conversion de l'époxyde est de 95 % et celle de l'anhydride maléique de 90 %. Le polyester obtenu a une masse moléculaire moyenne en nombre, par rapport à un étalonnage sur polystyrène, de 7500. La figure 1 montre que les conversions de l'époxyde et de l'anhydride sont, en particulier, pendant les 4 premières heures de la réaction, sensiblement égales à chaque instant, ce qui permet de conclure à la formation d'un polymère parfaitement alterné. L'homopolymérisation de l'époxyde est faible : elle n'atteint pas 10 % au bout des 6 heures de réaction.

**Exemple 2**

On opère dans les mêmes conditions que dans l'exemple 1, mais en employant un complexe azoté de titane de formule générale (I), définie ci-avant, dans laquelle $R^1$, $R^2$ et $R^3$ identiques, représentent chacun un groupe isopropyle, m = n = p = q = 1 et L représente le reste de l'hydroxy-8 quinoléine. Après 6 heures de réaction à 100°C la conversion de l'anhydride maléique est de 85 % et celle de l'époxyde de 100 %. On a représenté sur la figure 2 le pourcentage de conversion de chacun des constituants en fonction du temps (en heure). La courbe A concerne l'anhydride maléique et la courbe B l'époxy-1,2 dodécane.

**Exemple 3**

On répète l'exemple 1, mais on utilise comme complexe du titane un composé de formule générale (I) définie ci-avant, dans laquelle $R^1$, $R^2$ et $R^3$, identiques, représentent chacun un groupe n-butyle, m = n = p = q = 1 et L représente le reste du diméthylamino-1 propanol-2 (reste d'un composé répondant à la formule générale (II) définie ci-avant). Après 6 heures de réaction à 100 °C, la conversion de l'anhydride maléique est de 95 % et celle de l'époxyde de 97 %. On a représenté sur la figure 3 le pourcentage de conversion de chacun des constituants en fonction du temps (en heure). La courbe A concerne l'anhydride maléique et la courbe B l'époxy-1,2 dodécane.

**Exemple 4 (comparaison)**

On opère dans les mêmes conditions que dans l'exemple 1, mais en introduisant, dans le mélange réactionnel, 0,92 ml d'une solution dans le toluène, à 50 % en poids de titanate de butyle de formule Ti $(OC_4 H_9)_4$ (1,5 x $10^{-3}$ atome-gramme de titane) comme catalyseur à base de titane.

On a représenté sur la figure 4 le pourcentage de conversion de chacun des constituants en fonction du temps (en heure). La courbe A concerne l'anhydride maléique et la courbe B l'époxy-1,2 dodécane. Après 6 heures de réaction à 100 °C, la conversion de l'époxyde est de 100 % et celle de l'anhydride maléique de 74 %. On constate sur la figure 4 que la conversion de l'époxyde est nettement plus rapide que celle de l'anhydride dès le début de la réaction. Le polymère obtenu n'est pas un polymère parfaitement alterné. L'homopolymérisation de l'époxyde est assez élevée et elle dépasse largement 20 % au bout des 6 heures de réaction à 100 °C.

**Exemple 5**

On introduit, dans un réacteur de 100 ml, muni d'un système d'agitation et d'un système de régulation de

température, 14,7 g (0,15 mole) d'anhydride maléique, 41,47 g (0,225 mole) d'époxy-1,2 dodécane, 7,4 g de phényldodécane, 17,6 g de toluène et 0,49 g (1,5 x $10^{-3}$ mole) de complexe azoté de titane de formule générale (I), définie ci-avant, dans laquelle $R^1$, $R^2$ et $R^3$ identiques représentent chacun un groupe isopropyle, m = n = p = q = 1 et L représente le reste du diméthylamino-1 propanol-2 (reste d'un composé répondant à la formule générale (II) définie ci-avant). Ce complexe a été préparé selon la méthode décrite par MERELL et ALYEA dans Inorganic and nuclear chemistry letters vol. 9 (1973), pages 69 à 74, en y remplaçant le benzène par le toluène.

Le mélange obtenu est porté à 100 °C et maintenu, sous agitation constante, à cette température pendant 6 heures. La réaction est suivie par IR et GPC comme dans l'exemple 1. On a représenté sur la figure 5 la conversion molaire de chacun des constituants en fonction du temps en heure (mesuré par GPC; le phényldodécane présent dans le milieu de réaction est utilisé comme étalon interne). La courbe A représente la consommation (en fonction du temps en heure) de l'anhydride maléique et la courbe B celle de l'époxy-1,2 dodécane. On constate qu'après 4 heures de réaction à 100 °C, la totalité de l'anhydride maléïque introduite dans le réacteur (soit 0,15 mole) est consommée et la consommation de l'époxyde est de 0,17 mole ; l'homopolymérisation de l'époxyde est donc faible (inférieure à 10%). Le mélange de réaction est maintenu pendant encore 2 heures à 100 °C et on constate que la consommation totale de l'époxyde, après 6 heures de réaction à 100°C, est de 0,175 mole, ce qui montre qu'il n'y a, dans les conditions choisies, qu'une très faible homopolymérisation de l'époxyde.

**Exemple 6**

On répète l'exemple 1, mais on utilise comme complexe azoté de titane un composé de formule générale (I) définie ci-avant dans laquelle $R^1$,$R^2$ et $R^3$, identiques, représentent chacun un groupe isopropyle, m = n = p = q = 1 et L représente le reste de la méthyldiéthanolamine. Après 6 heures de réaction à 100 °C, les conversions de l'anhydride maléique et de l'époxyde sont chacune sensiblement égales à 100 %. On ne constate pas d'homopolymérisation de l'époxyde. On a représenté sur la figure 6 le pourcentage de conversion de chacun des constituants en fonction du temps (en heure). La courbe A concerne l'anhydride maléique et la courbe B l'époxy-1,2 dodécane.

**Exemple 7**

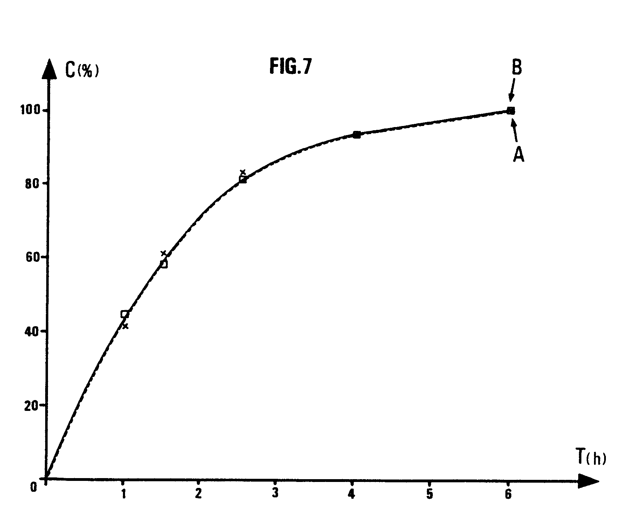

On répète l'exemple 1, mais on utilise comme complexe azoté du titane un composé de formule générale (I), définie ci-avant, dans laquelle $R^1$, $R^2$ et $R^3$, identiques représentent chacun un groupe isopropyle, m = n = p = q = 1 et L représente le diméthylaminoéthanol. On a représenté sur la figure 7 le pourcentage de conversion de chacun des constituants en fonction du temps (en heure). La courbe A concerne l'anhydride maléique et la courbe B l'époxy-1, 2 dodécane. Après 6 heures de réaction à 100°C les conversions de l'anhydride et de l'époxyde sont sensiblement égales à 100 % et on ne constate pas d'homopolymérisation de l'époxyde.

**Exemple 8**

On répète l'exemple 7, mais en remplaçant l'époxy-1,2 dodécane par l'ester éthyl-2 hexylique de l'acide époxy-9,10 octadécanoïque. Après 6 heures de réaction à 100°C, la conversion de l'époxyde est de 62 % et celle de l'anhydride maléique de 58%.

**Exemple 9**

On répète l'exemple 7, mais en remplaçant l'époxy-1,2 dodécane par l'époxy-1-2 butane, en employant du xylène comme solvant de la réaction au lieu du toluène et en maintenant la température de réaction à 50 °C. Après 4 heures de réaction à 50 °C les conversions de l'anhydride maléique et de l'époxy-1,2, butane sont chacune sensiblement égales à 100 %.

## Revendications

1. Procédé de condensation d'au moins un époxyde sur au moins un anhydride cyclique d'un acide dicarboxylique en présence d'un catalyseur à base d'au moins un complexe azoté du titane de formule générale suivante :

$$(I) \qquad Ti(OR^1)_m(OR^2)_n(OR^3)_p\ L_q$$

dans laquelle :

- m, n et p représentent chacun, indépendamment les uns des autres, un nombre égal à O ou 1, q représente un nombre entier de 1 à 4 et dans tous les cas la somme m + n + p + q est égale à 4;
- $R^1$, $R^2$ et $R^3$ représentent chacun, indépendamment les uns des autres, un groupe hydrocarboné, ayant de 1 à 30 atomes de carbone, substitué ou non par au moins un hétéroatome ou par au moins un groupe hétéroatomique ;
- le ou les groupes L représentent chacun, indépendamment les uns des autres, le reste d'un composé azoté.

**2.** Procédé selon la revendication 1 dans lequel ledit complexe azoté du titane répond à la formule générale (I) dans la quelle $R^1$, $R^2$ et $R^3$ représentent chacun, indépendamment les uns des autres, un groupe alkyle ou alcényle, linéaire ou ramifié.

**3.** Procédé selon l'une des revendications 1 et 2 dans lequel ledit complexe azoté du titane répond à la formule générale (I) dans laquelle $R^1$, $R^2$ et $R^3$ identiques, représentent chacun un groupe alkyle linéaire ou ramifié.

**4.** Procédé selon l'une des revendications 1 à 3 dans lequel ledit complexe azoté du titane répond à la formule générale (I) dans laquelle le ou les groupes L représentent chacun, indépendamment les uns des autres, le reste d'un composé choisi dans le groupe formé par les composés azotés répondant à l'une des formules générales (II) et (III) :

(II)

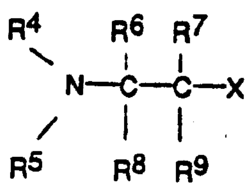

(III)

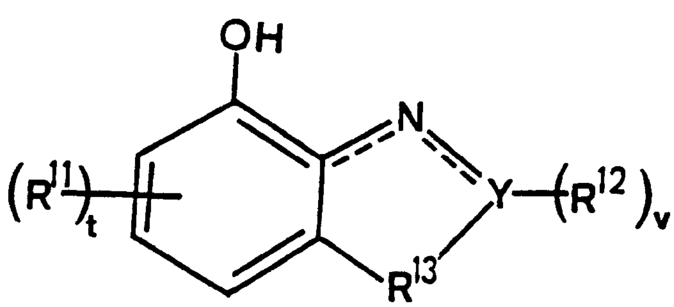

dans lesquelles :

- X représente un groupe hydroxyle ou un groupe azoté de formule $-NHR^{10}$ dans laquelle $R^{10}$ représente un atome d'hydrogène ou un groupe hydrocarboné, ayant de 1 à 30 atomes de carbone, substitué ou non par au moins un hétéroatome ou par au moins un groupe hétéroatomique ;
- $R^4$, $R^5$, $R^6$, $R^7$, $R^8$ et $R^9$ représentent chacun, indépendamment les uns des autres, un atome d'hydrogène ou un groupe hydrocarboné, ayant de 1 à 30 atomes de carbone, substitué ou non par au moins un hétéroatome ou par au moins un groupe hétéroatomique, deux au moins de ces groupes $R^4$ à $R^9$ pouvant former ensemble avec les atomes auxquels ils sont liés un cycle aliphatique saturé ou insaturé, un cycle aromatique ou un hétérocycle saturé ou insaturé ;
- t représente un nombre entier de 1 à 3 ,
- v représente O ou 1 ;
- chacun des $R^{11}$, indépendamment, représente un atome d'hydrogène, un atome d'halogène, un groupe hydrocarboné, ayant de 1 à 30 atomes de carbone, substitué ou non par au moins un hétéroatome ou par au moins un groupe hétéroatomique, deux groupes $R^{11}$ (lorsque t représente 2 ou 3), pouvant former ensemble avec les atomes de carbone auxquels ils sont liés un cycle hydrocarboné, saturé, insaturé, aromatique, ou un hétérocycle ;
- lorsque v = 1, -Y représente un atome de carbone, $R^{12}$ représente un atome d'hydrogène, un groupe hydrocarboné, ayant de 1 à 30 atomes de carbone, substitué ou non par au moins un hétéroatome ou par au moins un groupe hétéroatomique, $R^{12}$ pouvant également former avec l'atome auquel il

est lié et l'un des atomes du groupe $R^{13}$, défini ci-après, un cycle hydrocarboné, saturé, insaturé, aromatique ou un hétérocycle et $R^{13}$ représente un groupe hydrocarboné divalent, ayant de 1 à 12 atomes de carbone, substitué ou non par au moins un hétéroatome ou par au moins un groupe hétéroatomique ;

- lorsque v = 0, -Y représente un hétéroatome, $R^{13}$ représente un groupe hydrocarboné, divalent, ayant de 1 à 12 atomes de carbone, substitué ou non par au moins un groupe hétéroatomique.

5. Procédé selon l'une des revendications 1 à 4 dans lequel ledit complexe azoté du titane répond à la formule générale (I) dans laquelle le ou les groupes L représentent chacun, indépendamment les uns des autres, le reste d'un composé de formule générale (II), dans laquelle X représente le groupe hydroxyle ou le groupe amino, choisi parmi les composés suivants :
la monoéthanolamine, la diéthanolamine, la triéthanolamine, l'amino-1 propanol-2, la diisopropanolamine, la triisopropanolamine, l'amino-1 butanol-2, la di-sec-butanolamine, la tri-sec-butanolamine, le diméthylamino-2 éthanol, la diéthyléthanolamine, le méthylamino-2 éthanol, la butyléthanolamine, la dibutyléthanolamine, l'isopropyléthanolamine, la diisopropyléthanolamine, la méthyldiéthanolamine, l'éthyldiéthanolamine, le diméthylamino-1 propanol-2, l'amino-2 méthyl-2 propanol-1, le diméthylamino-2 méthyl-2 propanol-1 et la triméthyléthylènediamine.

6. Procédé selon l'une des revendications 1 à 4 dans lequel ledit complexe azoté du titane répond à la formule générale (I) dans laquelle le ou les groupes L représentent chacun, indépendamment les uns des autres, le reste d'un composé de formule générale (III) choisi parmi les composés suivants :
l'hydroxy-8 quinoléine, l'hydroxy-7 indole, 1'hydroxy-5 ou -8 quinoxaline, l'hydroxy-8 quinazoline, l'hydroxy-8 cinnoline, l'hydroxy-4 ou -5 acridine, l'hydroxy-1, -4, -6 ou -9 phénazine et les dérivés de ces composés substitués par au moins un groupe $R^{11}$ tel que défini ci-avant dans la revendication 4.

7. Procédé selon l'une des revendications 1 à 6 dans lequel ledit complexe azoté du titane répond à la formule générale (I) dans laquelle m=n=1, p=0, q=2 et $R^1$ et $R^2$, identiques, représentent chacun un groupe alkyle inférieur, linéaire ou ramifié, ayant de 1 à 4 atomes de carbone.

8. Procédé selon l'une des revendications 1 à 6 dans lequel ledit complexe azoté du titane répond à la formule générale (I) dans laquelle m=n=p=q=1, et $R^1$, $R^2$ et $R^3$, identiques, représentent chacun un groupe alkyle inférieur, linéaire ou ramifié, ayant de 1 à 4 atomes de carbone.

9. Procédé selon l'une des revendications 1 à 8 de condensation d'au moins un époxyde sur au moins un anhydride cyclique d'un acide dicarboxylique vicinal saturé ou insaturé.

10. Procédé selon l'une des revendications 1 à 8 dans lequel l'anhydride cyclique est choisi dans le groupe formé par l'anhydride maléique, l'anhydride citraconique, les anhydrides halogénomaléiques, l'anhydride succinique, les anhydrides alcénylsucciniques ou polyalcénylsucciniques, l'anhydride phtalique, les anhydrides phtaliques substitués par au moins un atome d'halogène et/ou au moins un groupe alkyle, l'anhydride trimellitique, l'anhydride cyclohexanedicarboxylique-1,2, les anhydrides cyclohexanedicarboxyliques-1,2 substitués par au moins un atome d'halogène et/ou au moins un groupe alkyle, l'anhydride nadique, les anhydrides nadiques substitués par au moins un atome d'halogène et/ou au moins un groupe alkyle, l'anhydride glutarique, les anhydrides glutariques substitués par au moins un atome d'halogène et/ou au moins un groupe alkyle, l'anhydride glutaconique et les anhydrides glutaconiques substitués par au moins un atome d'halogène et/ou au moins un groupe alkyle.

11. Procédé selon l'une des revendications 1 à 10 de condensation sur au moins un anhydride cyclique d'un acide dicarboxylique d'au moins un époxyde répondant à la formule générale suivante :

(IV)

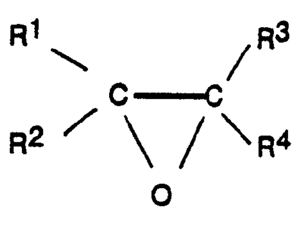

dans laquelle $R^1$ et $R^3$, identiques ou différents, représentent chacun un atome d'hydrogène ou un groupe

alkyle inférieur ayant de 1 à 4 atomes de carbone, $R^2$ et $R^4$, identiques ou différents, représentent chacun un atome d'hydrogène, un groupe hydrocarboné, substitué ou non par au moins un atome d'halogène, ayant de 1 à 30 atomes de carbone, un groupe de formule $R^5$-O-$R^6$- dans laquelle $R^5$ représente un groupe hydrocarboné, substitué ou non par au moins un atome d'halogène, ayant de 1 à 30 atomes de carbone et $R^6$ représente un groupe hydrocarboné divalent ayant de 1 à 30 atomes de carbone, $R^2$ pouvant également représenter un groupe de formule

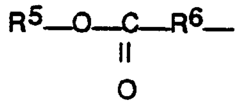

ou un groupe de formule

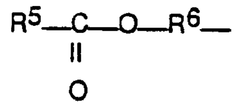

dans lesquelles $R^5$ et $R^6$ ont la définition donnée ci-avant, $R^2$ et $R^4$ pouvant également former ensemble avec les atomes de carbone auxquels ils sont liés un cycle saturé ou insaturé ayant de 4 à 30 atomes de carbone.

**Patentansprüche**

**1.** Verfahren zur Kondensation von mindestens einem Epoxid mit mindestens einem cyclischen Anhydrid einer Dicarbonsäure in Gegenwart eines Katalysators auf der Grundlage von mindestens einem Stickstoffkomplex von Titan mit der folgenden allgemeinen Formel:

(I) $Ti(OR^1)_m(OR^2)_n(OR^3)_pL_q$

in dem:
- m, n, und p jeder, unabhängig voneinander, eine Zahl darstellen, die gleich 0 oder 1 ist, q stellt eine ganze Zahl zwischen 1 und 4 dar und in allen Fällen ist die Summe m+n+p+q gleich 4;
- $R^1$, $R^2$ und $R^3$ jeder, unabhängig voneinander, eine Kohlenwasserstoffgruppe darstellen, die zwischen einem und 30 Kohlenstoffatomen besitzt, die mit mindestens ein Heteroatom oder eine Heteroatomgruppe substituiert ist oder nicht;
- die Gruppe(n) L unabhängig voneinander, Reste einer Stickstoffverbindung darstellt (darstellen).

**2.** Verfahren gemäß Anspruch 1, bei dem der besagte Stickstoffkomplex von Titan der allgemeinen Formel (I) entspricht und bei dem $R^1$, $R^2$ und $R^3$ jeder, unabhängig voneinander, eine Alkyl- oder Alkenylgruppe darstellt, die linear oder verzweigt ist.

**3.** Verfahren gemäß einem der Ansprüche 1 oder 2, bei dem der besagteStickstoffkomplex von Titan der allgemeinen Formel (I) entspricht und bei dem $R^1$, $R^2$ und $R^3$ identisch sind und jeder eine lineare oder verzweigte Alkylgruppe darstellt.

**4.** Verfahren gemäß einem der Ansprüche 1 bis 3, bei dem der besagte Stickstoffkomplex von Titan der allgemeinen Formel (I) entspricht und bei dem jeder der Reste L, unabhängig voneinander, den Rest einer Verbindung darstellt, die aus der Gruppe gewählt wird, die von den Stickstoffverbindungen, die einer der allgemeinen Formeln (II) oder (III) entsprechen, gebildet wird:

(II)

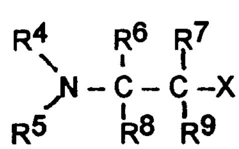

(III)

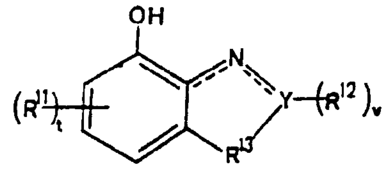

bei denen

- X eine Hydroxylgruppe oder eine Stickstoffgruppe mit der Formel $-NHR^{10}$ darstellt, bei der $R^{10}$ ein Wasserstoffatom oder eine Kohlenwasserstoffgruppe mit einem bis 30 Kohlenstoffatomen darstellt, die mit mindestens einem Heteroatom oder mindestens einer Heteroatomgruppe substituiert sein kann, aber nicht muß;
- $R^4$, $R^5$, $R^6$, $R^7$, $R^8$ und $R^9$ jeder, unabhängig voneinander, ein Wasserstoffatom oder eine Kohlenwasserstoffgruppe darstellen, die ein bis 30 Kohlenstoffatome umfaßt, substituiert oder nicht mit mindestens einem Heteroatom oder mindestens einer Heteroatomgruppe, zumindest zwei dieser Gruppen $R^4$ bis $R^9$ können zusammen mit den Atomen, an die sie gebunden sind, einen gesättigten oder ungesättigten aliphatischen Cyclus bilden, einen aromatischen Cyclus oder einen gesättigten oder ungesättigten Heterocyclus;
- t eine ganze Zahl von 1 bis 3 darstellt;
- v 0 oder 1 darstellt
- jeder der Reste $R^{11}$, unabhängig voneinander, ein Wasserstoffatom, ein Halogenatom, eine Kohlenwasserstoffgruppe mit zwischen einem und 30 Kohlenstoffatomen darstellt, die mit mindestens einem Heteroatom oder mindestens einer Heteroatomgruppe substituiert sein kann, aber nicht muß, zwei $R^{11}$-Gruppen (wenn t 2 oder 3 darstellt) können zusammen mit den Kohlenstoffatomen, an die sie gebunden sind, einen gesättigten, ungesättigten oder aromatischen Kohlenwasserstoffcyklus oder einen Heterocyclus bilden;
- wenn v = 1 ist, stellt Y ein Kohlenstoffatom dar, $R^{12}$ stellt ein Wasserstoffatom dar, eine Kohlenwasserstoffgruppe mit einem bis 30 Kohlenstoffatomen, die mit mindestens einem Heteroatom oder mindestens einer Heteroatomgruppe substituiert sein kann, aber nicht muß, $R^{12}$ kann auch mit dem Atom, an das es gebunden ist und mit einem der Atome der Gruppe $R^{13}$ die unten definiert ist, einen gesättigten, ungesättigten oder aromatischen Kohlenwasserstoffcyklus oder einen Heterocyclus bilden und $R^{13}$ stellt eine divalente Kohlenwasserstoffgruppe mit einem bis 12 Kohlenstoffatomen dar, die mit mindestens einem Heteroatom oder mindestens einer Heteroatomgruppe substituiert sein kann aber nicht muß;
- wenn v = 0 -Y ein Heteroatom darstellt und $R^{13}$ eine divalente Kohlenwasserstoffgruppe mit einem bis 12 Kohlenstoffatomen darstellt, die mit mindestens einem Heteroatom oder mindestens einer Heteroatomgruppe substituiert sein kann, aber nicht muß.

5. Verfahren gemäß einem der Ansprüche 1 bis 4, bei dem der besagte Stickstoffkomplex von Titan der allgemeinen Formel (I) entspricht und bei der der Rest oder die Reste L jeder, unabhängig voneinander den Rest einer Verbindung mit der allgemeinen Formel (II) darstellen, in der X eine Hydroxigruppe oder eine Aminogruppe darstellt, die aus den folgenden Verbindungen ausgewählt wird:
Monoethanolamin, Diethanolamin, Triethanolamin, 1-Amino-2-propanol, Diisopropanolamin, Triisopropanolamin, 1-Amino-2-butanol, Di-sek.-butanolamin, Tri-sek.-butanolamin, 2-Dimethylaminoethanol, Diethylethanolamin, 2-Methylaminoethanol, Butylethanolamin, Dibutylethanolamin, Isopropylethanolamin, Diisopropylethanolamin, Methyldiethanolamin, Ethyldiethanolamin, 1-Dimethylamino-2-propanol, 2-Amino-2-methyl-1-propanol, 2-Dimethylamino-2-methyl-1-propanol und Trimethylethylendiamin.

6. Verfahren gemäß einem der Ansprüche 1 bis 4, bei dem der besagte Stickstoffkomplex von Titan der allgemeinen Formel (I) entspricht und bei der der Rest oder die Reste L jeder, unabhängig voneinander, den Rest einer Verbindung mit der allgemeinen Formel (III) darstellen, die aus den folgenden Verbindungen ausgewählt wird:
8Hydroxichinolin, 7-Hydroxiindol, 5-Hydroxichinoxalin oder 8-Hydroxichinoxalin, 8-Hydroxichinazolin, 8-Hydroxicinnolin, 4-Hydroxiacridin oder 5-Hydroxiacridin, 1-, 4-, 6- oder 9-Hydroxiphenazin und die Derivate dieser Verbindungen, die mit mindestens einer Gruppe $R^{11}$, wie sie oben in Anspruch 4 definiert wurde, substituiert sind.

7. Verfahren gemäß einem der Ansprüche 1 bis 6, bei dem der besagte Stickstoffkomplex von Titan der allgemeinen Formel (I) entspricht, in der m = n = 1, p = 0, q = 2 und $R^1$ und $R^2$ identisch sind und jeder eine niedere lineare oder verzweigte Alkylgruppe mit 1 bis 4 Kohlenstoffatomen darstellt.

8. Verfahren gemäß einem der Ansprüche 1 bis 6, bei dem der besagte Stickstoffkomplex von Titan der allgemeinen Formel (I) entspricht, in der m = n = p = q = 1 und $R^1$ und $R^2$ identisch sind und jeder eine niedere lineare oder verzweigte Alkylgruppe mit 1 bis 4 Kohlenstoffatomen darstellt.

9. Verfahren gemäß einem der Ansprüche 1 bis 8 zur Kondensation von mindestens einem Epoxid mit mindestens einem cyclischen Anhydrid einer vicinalen gesättigten oder ungesättigten Dicarbonsäure

10. Verfahren gemäß einem der Ansprüche 1 bis 8, bei dem das cyclische Anhydrid aus der Gruppe gewählt wird, die von Maleinsäureanhydrid, Zitronensäureanhydrid, den Halogenmaleinsäureanhydriden Bernsteinsäureanhydrid, den Alkenyl- und Polyalkenylmaleinsäureanhydriden Phthalsäureanhydrid, den Phthalsäureanhydriden, die mit mindestens einem Halogenatom und/oder mindestens einer Alkylgruppe substituiert sind, Trimellitsäureanhydrid, Cyclohexan-1,2-dicarbonsäureanhydrid, den Cyclohexan-1,2-dicarbonsäureanhydriden die mit mindestens einem Halogenatom und/oder mindestens einer Alkylgruppe substituiert sind, Nadinsäureanhydrid, den Nadinsäureanhydriden, die mit mindestens einem Halogenatom und/oder mindestens einer Alkylgruppe substituiert sind, Glutarsäureanhydrid, den Glutarsäureanhydriden, die mit mindestens einem Halogenatom und/oder mindestens einer Alkylgruppe substituiert sind, Glutaconsäureanhydrid und den Glutaconsäureanhydriden, die mit mindestens einem Halogenatom und/oder mindestens einer Alkylgruppe substituiert sind, gebildet wird.

11. Verfahren gemäß einem der Ansprüche 1 bis 10 zur Kondensation von mindestens einem cyclischen Anhydrid einer Dicarbonsäure mit mindestens einem Epoxid, das der folgenden allgemeinen Formel entspricht:

(IV) 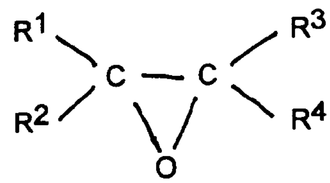

in der $R^1$ und $R^3$ gleich oder unterschiedlich sind und jeder ein Wasserstoffatom oder eine niedere Alkylgruppe mit einem bis 4 Kohlenstoffatomen darstellt, $R^2$ und $R^4$ gleich oder unterschiedlich sind und jeder ein Wasserstoffatom oder eine, eventuell mit mindestens einem Halogenatom substituierte, Kohlenwasserstoffgruppe darstellt, die zwischen einem und 30 Kohlenstoffatomen besitzt, eine Gruppe mit der Formel $R^5$-O-$R^6$, bei der $R^5$ eine Kohlenwasserstoffgruppe darstellt, die eventuell mit mindestens einem Halogenatom substituiert ist und ein bis 30 Kohlenstoffatome besitzt und $R^6$ eine divalente Kohlenwasserstoffgruppe mit einem bis 30 Kohlenstoffatomen darstellt; $R^2$ kann ebenfalls eine Gruppe mit der Formel

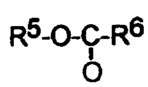

darstellen oder eine Gruppe mit der Formel

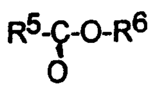 ,

bei denen $R^5$ und $R^6$ die oben gegebene Definition besitzen; $R^2$ und $R^4$ können ebenfalls zusammen mit den Kohlenstoffatomen, an die sie gebunden sind, einen gesättigten oder ungesättigten Ring mit z.B. 4 bis 30 Kohlenstoffatomen bilden.

## Claims

1. A process for condensing at least one epoxide on at least one cyclic anhydride of a dicarboxylic acid in the presence of a catalyst consisting of at least one titanium nitrogenous complex of the following general formula :

$$\text{(I)} \qquad Ti(OR^1)_m(OR^2)_n(OR^3)_p\,L_q$$

in which :
- m, n and p represent each, independantly from one another, a number equal to 0 or 1, q represents an integer from 1 to 4 and in all cases the sum m + n + p + q is 4 ;
- $R^1$, $R^2$ and $R^3$ represent each, independantly from one another, a hydrocarbon group with 1 to 30 atoms of carbon, substituted or not by at least one hetero-atom or by at least one hetero-atomic group ;
- the L group or groups represent each, independantly from one another, the remainder of a nitrogenous compound.

2. A process according to claim 1 wherein said titanium nitrogenous complex corresponds to the general formula (I) in which $R^1$, $R^2$ and $R^3$ represent each, independantly from one another. an alkyl or alkenyl group, linear or branched.

3. A process according to one of claims 1 and 2 wherein said titanium nitrogenous complex corresponds to the general formula (I) in which $R^1$, $R^2$ and $R^3$, identical, represent each a linear or branched alkyl group.

4. A process according to one of claims 1 to 3 wherein said titanium nitrogenous complex corresponds to the general formula (I) in which the L group or groups represent each, independantly from one another, the remainder of a compound selected from the group consisting of the nitrogenous compounds corresponding to one of the general formulas (II) and (III) :

(II) 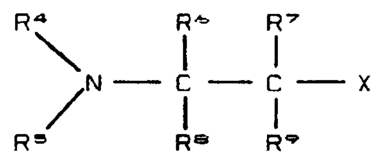

(III)

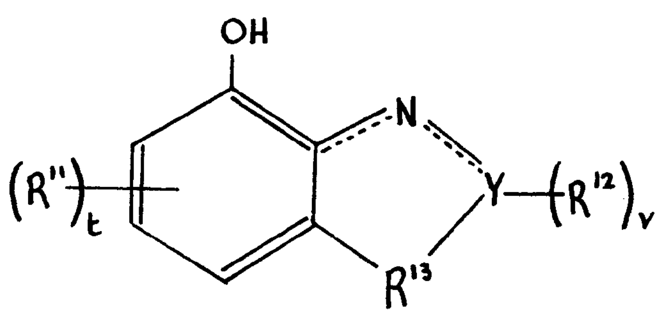

in which :
- X represents a hvdroxyl group or a nitrogenous group of the formula $NHR^{10}$ in which $R^{10}$ represents an atom of hydrogen or a hydrocarbon group with 1 to 30 atoms of carbon, substituted or not by at least one hetero-atom or by at least one hetero-atomic group ;
- $R^4$, $R^5$, $R^6$, $R^7$, $R^8$ and $R^9$ represent each, independantly from one another, an atom of hydrogen or a hydrocarbon group with 1 to 30 atoms of carbon, substituted or not by at least one hetero-atom or by at least one hetero-atomic group, and at least two of these $R^4$ to $R^9$ groups can form together with the atoms to which they are bound a saturated or unsaturated aliphatic ring, a benzene ring or a saturated or unsaturated heterocycle ;
- t represents an integer from 1 to 3 ;
- v represents 0 or 1 ;
- each $R^{11}$ group independantly represents an atom of hydrogen, an atom of halogen, a hydrocarbon

group with 1 to 30 atoms of carbon, substituted or not by at least one hetero-atom or by at least one hetero-atomic group, and two $R^{11}$ groups (when t represents 2 or 3) can form together with the atoms of carbon to which they are bound a hydrocarbon, saturated, unsaturated, aromatic ring or a heterocycle ;

- when v = 1, -Y represents an atom of carbon, a hydrocarbon group with 1 to 30 atoms of carbon, substituted or not by at least one hetero-atom or by at least one hetero-atomic group, and $R^{12}$ can also form together with the atom to which it is bound and with one of the atoms of the $R^{13}$ group defined hereafter a hydrocarbon, saturated, unsaturated, a benzene ring or a heterocycle and $R^{13}$ represents a divalent hydrocarbon group with 1 to 12 atoms of carbon, substituted or not by at least one hetero-atom or by at least one hetero-atomic group ;
- when v = 0, -Y represents a hetero-atom, $R^{13}$ represents a divalent hydrocarbon group with 1 to 12 atoms of carbon, substituted or not by at least one hetero-atomic group.

5. A process according to one of claims 1 to 4 wherein said titanium nitrogenous complex corresponds to the general formula (I) in which each L group or groups represent, independantly from one another, the remainder of a compound of the general formula (II), in which X represents the hydroxyl or the amino group, selected from the following compounds : mono-ethanolamine, diethanolamine, tri-ethanolamine, amino-1 propanol-2, diisopropanolamine, tri-isopropanol-amine, amino-1 butanol-2, di-sec-butanolamine, tri-sec-butanolamine, dimethylamino-2 ethanol, di-ethylethanol-amine, methylamino-2 ethanol, butylethanolamine, dibutyl-ethanolamine, isopropylethanolamine, di-isopropyl-ethanolamine, methyldiethanolamine, ethyldiethanolamine, dimethylamino-1 propanol-2, amino-2 methyl-2 propanol-1, dimethylamino-2 methyl-2 propanol-1 and trimethyl-ethylenediamine.

6. A process according to one of claims 1 to 4 wherein said titanium nitrogenous complex corresponds to the general formula (I) in which the L group or groups represent each, independantly from one another, the remainder of a compound of general formula (III) selected from the following compounds : hydroxy-8 quinoline, hydroxy-7 indole, hydroxy-5 or -8 quinoxaline, hydroxy-8 quinazoline, hydroxy-8 cinnoline, hydroxy-4 or -5 acridine, hydroxy-1, -4, -6 or -9 phenazine and the derivatives of these compounds substituted by at least one $R^{11}$ group such as defined above in claim 4.

7. A process according to one of claims 1 to 6 wherein said titanium nitrogenous complex corresponds to the general formula (I) in which m = n = 1, p = 0, q = 2 and $R^1$ and $R^2$, identical, represent each a lower alkyl group, linear or branched, with 1 to 4 atoms of carbon.

8. A process according to one of claims 1 to 6 wherein said titanium nitrogenous complex corresponds to the general formula (I) in which m = n = p = q = 1, and $R^1$, $R^2$ and $R^3$, identical, represent each a lower alkyl group, linear or branched, with 1 to 4 atoms of carbon.

9. A process according to one of claims 1 to 8 for condensing at least one epoxide on at least one cyclic anhydride of a saturated or unsaturated vicinal dicarboxylic acid.

10. A process according to one of claims 1 to 8 wherein the cyclic anhydride is selected from the group consisting of maleic anhydride, citraconic anhydride, the halogenomaleic anhydrides, succinic anhydride, the alkenylsuccinic or poly-alkenylsuccinic anhydrides, phthalic anhydride, the phthalic anhydrides substituted by at least one atom of halogen and/or at least one alkyl group, trimellitic anhydride, cyclohexanedicarboxylic-1,2 anhydride, the cyclohexanedicarboxylic-1,2 anhydrides substituted by at least one atom of halogen and/or at least one alkyl group, nadic anhydride, the nadic anhydrides substituted by at least one atom of halogen and/or at least one alkyl group, glutaric anhydride, the glutaric anhydrides substituted by at least one atom of halogen and/or at least one alkyl group, glutaconic anhydride and the glutaconic anhydrides substituted by at least one atom of halogen and/or at least one alkyl group.

11. A process according to one of claims 1 to 10 for condensing on at least one cyclic anhydride of a dicarboxylic acid at least one epoxide corresponding to the following general formula :

(IV) 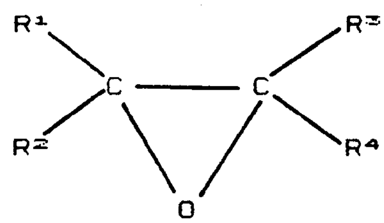

in which $R^1$ and $R^3$, identical or different, represent each an atom of hydrogen or a lower alkyl group with 1 to 4 atoms of carbon, $R^2$ and $R^4$, identical or different, represent each an atom of hydrogen, a hydrocarbon group, substituted or not by at least one atom of halogen. with 1 to 30 atoms of carbon, a group of formula $R^5$-O-$R^6$- in which $R^5$ represents a hydrocarbon group, substituted or not by at least one atom of halogen, with 1 to 30 atoms of carbon and $R^6$ represents a divalent hydrocarbon group with 1 to 30 atoms of carbon, while $R^2$ can also represent a group of formula

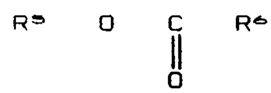

or a group of formula

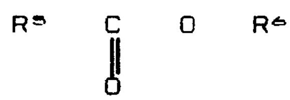

in which $R^5$ and $R^6$ have the definition given above, $R^2$ and $R^4$ can also form together with the atoms of carbon to which they are bound a saturated or unsaturated ring with 4 to 30 atoms of carbon.

FIG.1

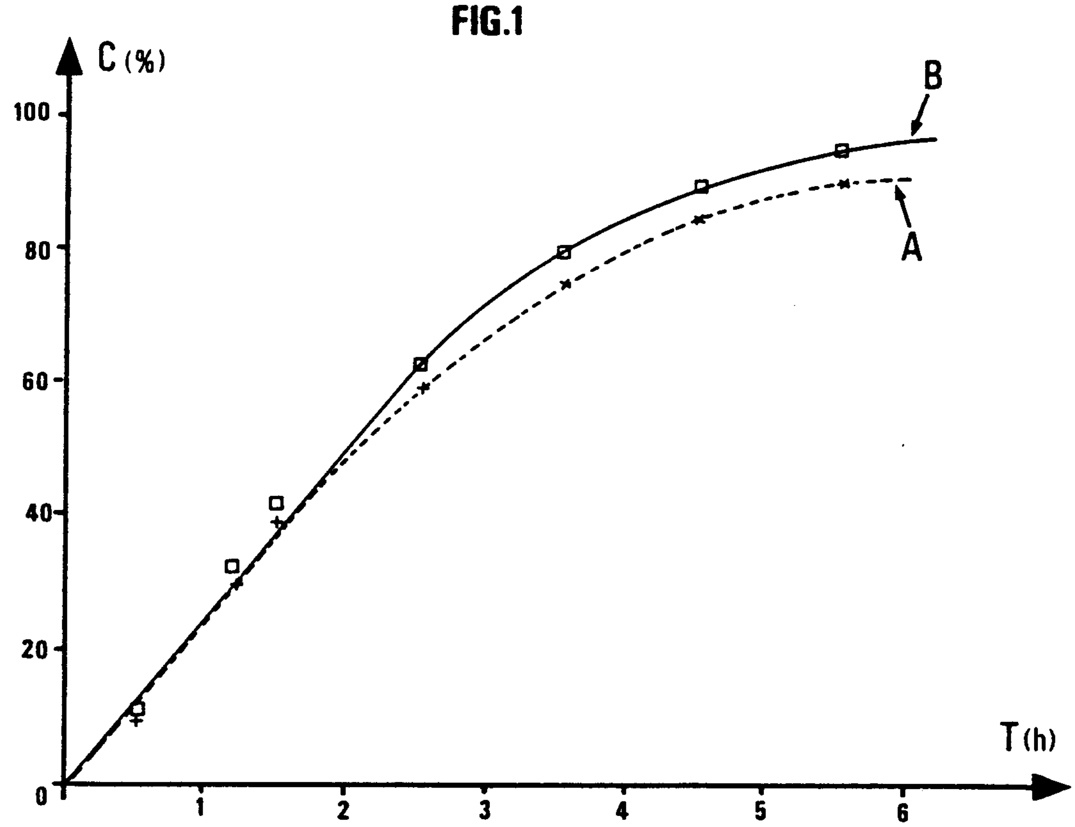


FIG.2

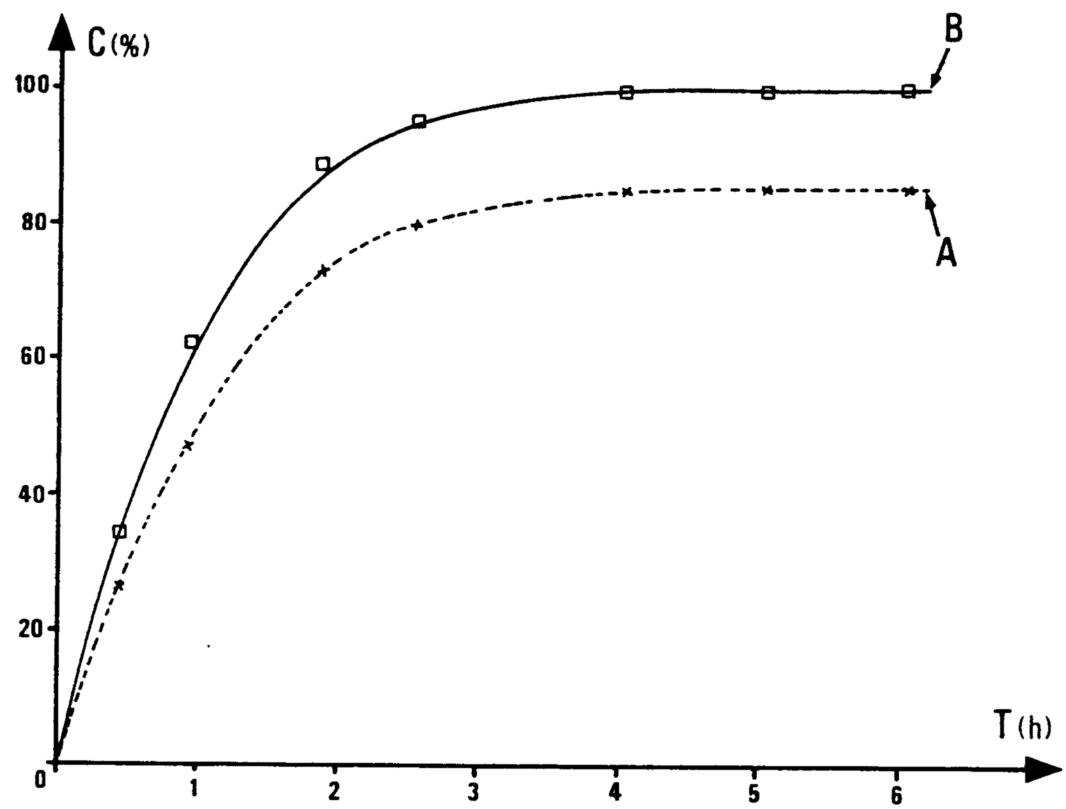

FIG.3

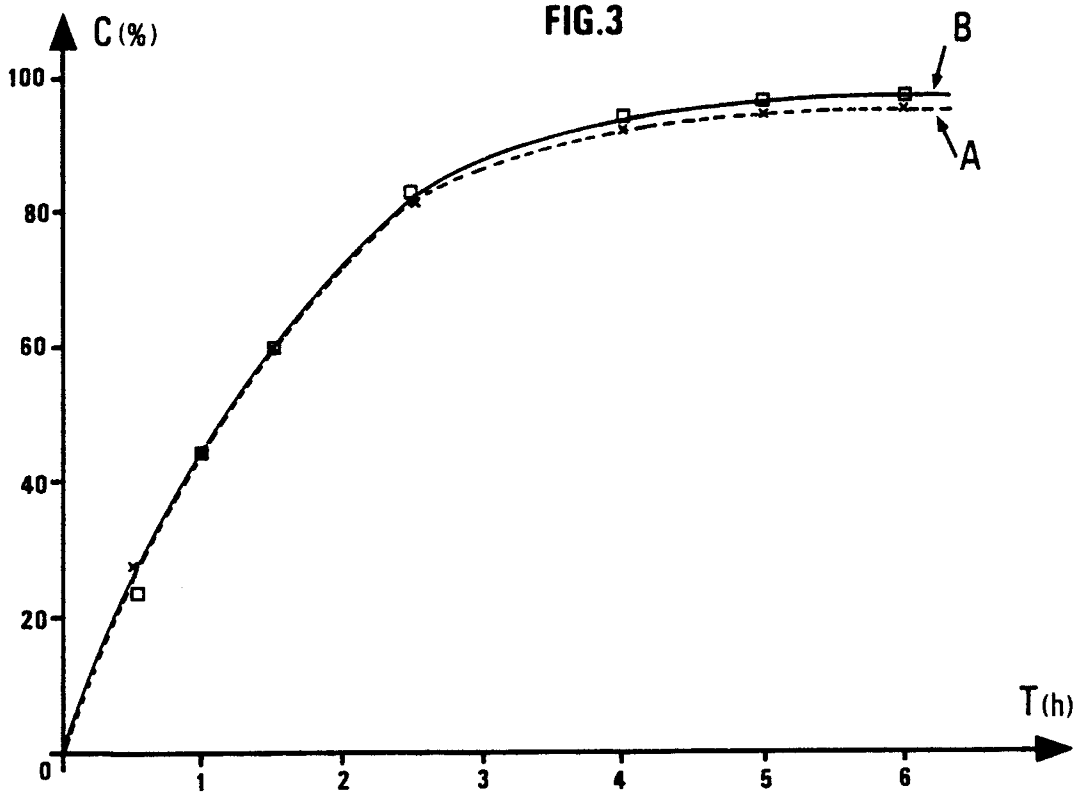


FIG.4

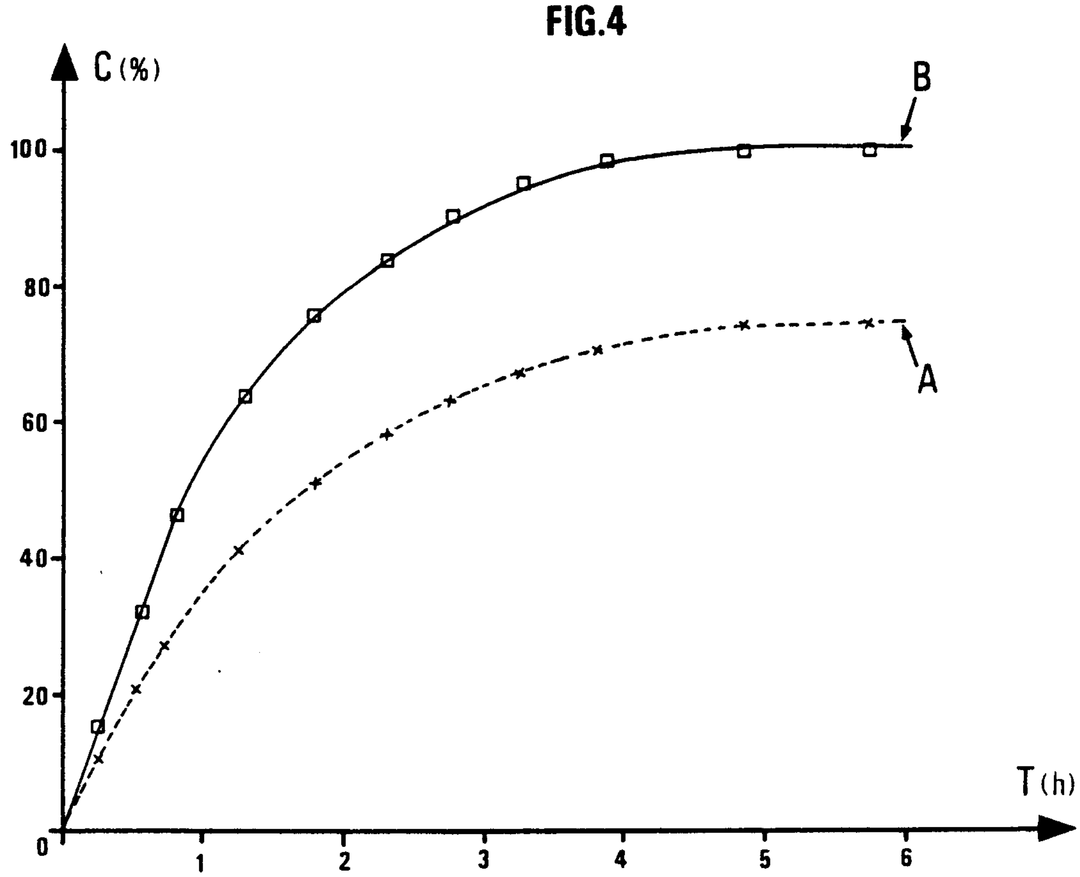

FIG.5

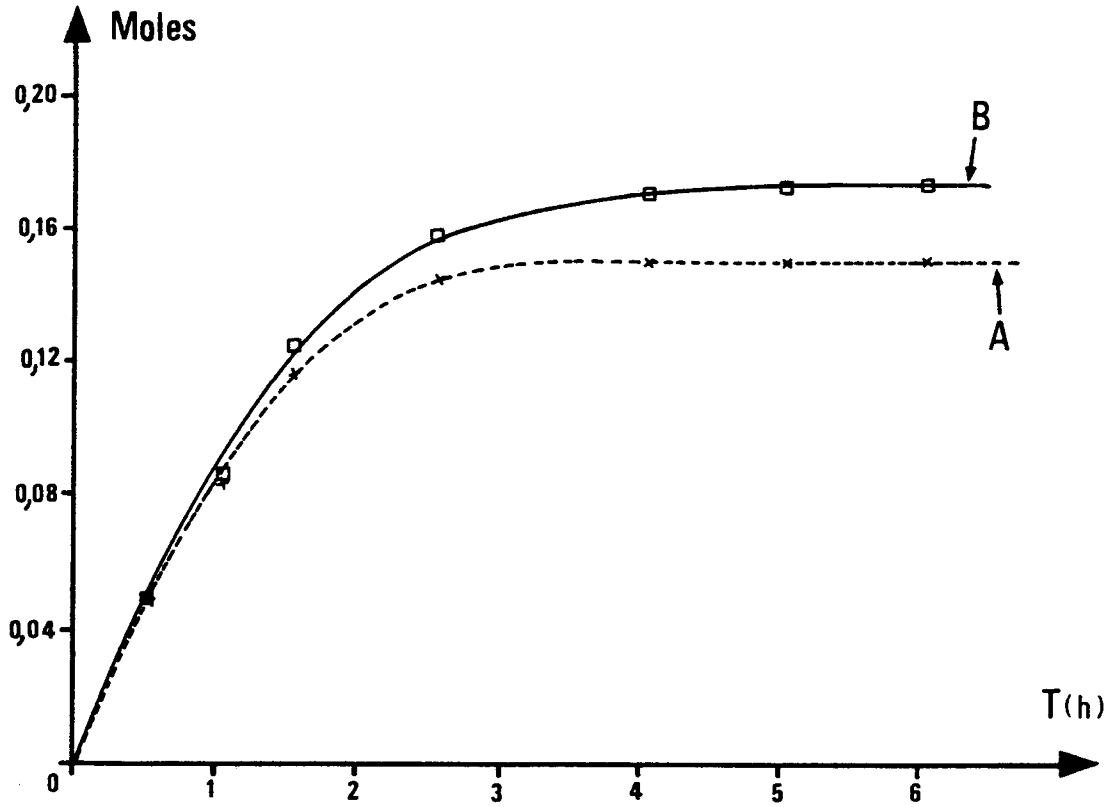
Moles
0,20
0,16
0,12
0,08
0,04
0
1
2
3
4
5
6
T(h)
B
A

FIG.6

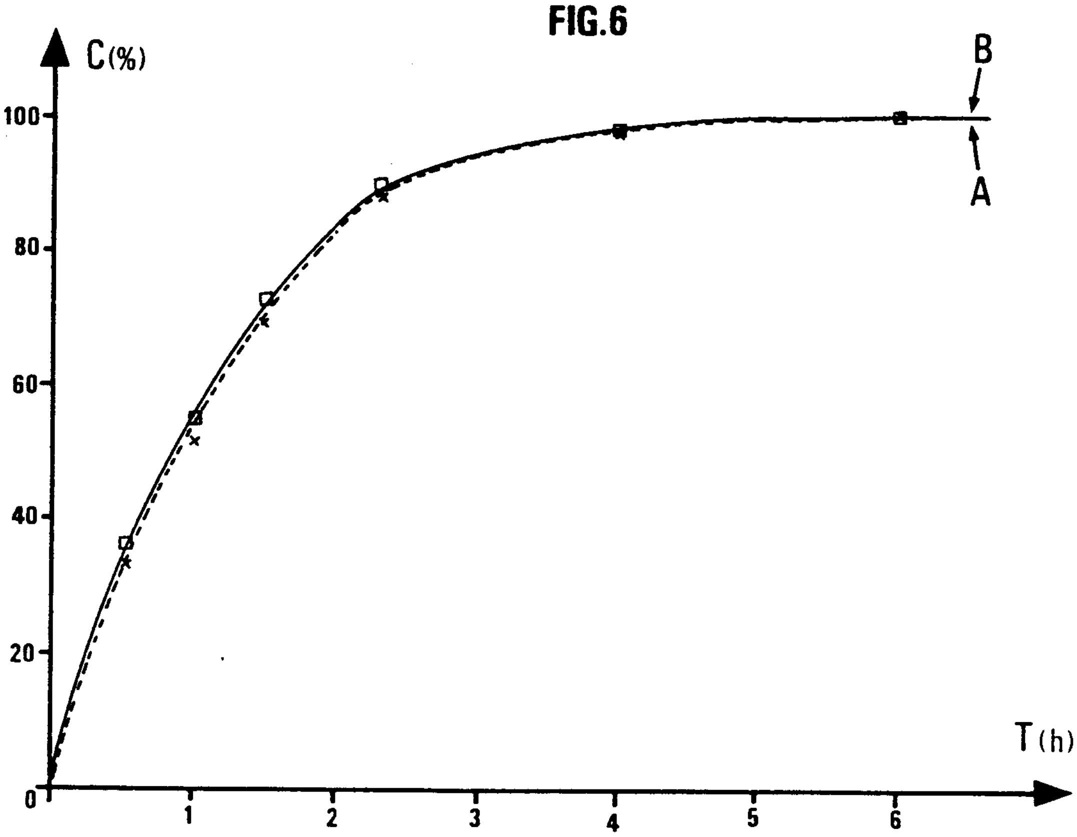
C(%)
100
80
60
40
20
0
1
2
3
4
5
6
T(h)
B
A

FIG.7